# EUROPÄISCHE PATENTSCHRIFT

(11) **EP 2 267 337 B1**
(45) Veröffentlichungstag und Bekanntmachung des Hinweises auf die Patenterteilung: **07.12.2011**
(21) Anmeldenummer: 10157472.1
(22) Anmeldetag: 24.03.2010
(51) Int. Cl.: F16H 57/02

(54) **Antriebsanordnung für ein Fahrzeug**
Drive assembly for a vehicle
Dispositif d'entraînement pour un véhicule

(30) Priorität: 25.06.2009 DE 102009027198
(43) Veröffentlichungstag der Anmeldung: 29.12.2010
(73) Patentinhaber: ZF Friedrichshafen AG, 88038 Friedrichshafen (DE)
(72) Erfinder: Streipardt, Peter, 99880 Waltershausen (DE); Stübner, Frank, 99894 Friedrichroda (DE)

(56) Entgegenhaltungen:
- EP-A2- 1 772 947
- EP-A2- 1 985 487
- US-A- 3 536 230

## Beschreibung

Die vorliegende Erfindung betrifft eine Antriebsanordnung für ein Fahrzeug gemäß der im Oberbegriff des Patentanspruches 1 näher definierten Art.

Beispielsweise aus den Druckschriften DE 92 08 118 U1, DE 101 32 318 A1 und DE 197 20 783 C2 sind jeweils Radantriebe mit einem Elektromotor und einem Getriebe bekannt. Bei den bekannten Radantrieben ist ein Antriebsritzel direkt auf einer Motorwelle befestigt und bildet mit einem Stirnrad eine erste Getriebestufe zum Antrieb einer Getriebewelle des Getriebes. Hierbei ergibt sich der Nachteil, dass bei der Montage des Motors die Laufverzahnung des Antriebsritzels beziehungsweise des Stirnrades des Getriebes beschädigt werden kann.

Darüber hinaus ist aus der Druckschrift DE 196 33 316 C2 ein Antrieb für ein Flurfördererfahrzeug bekannt. Der bekannte Antrieb umfasst einen Elektromotor, dessen Motorwelle mit einer Lagerstelle in einem Gehäuse des Getriebes des Antriebes gelagert ist. Nachteilig hierbei ist, dass infolge der kleinen Lagerbasis in dem Getriebegehäuse eine Schiefstellung des Antriebsritzels infolge eines fertigungsbedingten radialen Versatzes des Motors erfolgen kann.

Die Druckschrift EP1772947 wird als nächster stand der Technik angesehen und offenbart die Merkmale des Oberbegriffs des Anspruch 1.

Ferner ist aus der Fahrzeugtechnik bekannt, dass die getriebeseitig gelagerte Motorwelle in einem als Hohlwelle ausgebildeten Antriebsritzel über ein Profil geführt wird. Bei dieser Ausführung ist es nachteilig, dass eine Schiefstellung des Antriebsritzels infolge der kleinen Lagerbasis und dem möglichen Zwang in der Lagerung und der Profilverbindung infolge eines fertigungsbedingten radialen Versatzes des Motors und der Überbestimmung durch die vorgesehenen Lager realisiert wird, welches zu einer verminderten Lebensdauer und zu einer erhöhten Geräuschemission führt.

Demnach liegt der vorliegenden Erfindung die Aufgabe zu Grunde, eine Antriebsanordnung der eingangs beschriebenen Gattung derart zu gestalten, dass eine Überbestimmung der Lagerung und eine mögliche Schiefstellung des Antriebsritzels bei gleichzeitiger Kostenreduzierung verhindert wird.

Diese Aufgabe wird erfindungsgemäß durch die Merkmale des Patentanspruches 1 gelöst. Weitere vorteilhafte Ausgestaltungen ergeben sich aus den Unteransprüchen und den Zeichnungen.

Demnach wird eine Antriebsanordnung für ein Fahrzeug mit einem in ein Getriebe integriertes als Hohlwelle ausgebildetes Antriebsritzel vorgeschlagen, wobei eine zugeordnete Motorwelle drehfest in dem Antriebsritzel bzw. in der Hohlwelle aufgenommen ist und wobei das Antriebsritzel motorseitig über ein als Festlager wirkendes Wälzlager gelagert ist und radial über eine axial verschiebbare Naben-Wellenverbindung auf der Motorwelle abgestützt ist.

Dadurch, dass bei der erfindungsgemäßen Antriebsanordnung die Lagerung des Antriebsritzels über das als Festlager ausgebildete Wälzlager realisiert wird, kann eine Überbestimmung bei der Lagerung und eine Schiefstellung des Antriebsritzel sicher verhindert werden.

Vorzugsweise kann als Wälzlager ein Radialrillenkugellager oder dergleichen verwendet werden. Es sind aber auch andere Lageranordnungen einsetzbar, die die vorbeschriebene Wirkung erzielen. Als axial verschiebbare Naben-Wellenverbindung kann gemäß einer nächsten Weiterbildung der Erfindung vorgesehen sein, dass hierfür eine Zahnwellenverbindung, eine Vielkeilverbindung oder dergleichen verwendet wird. Das vorgesehene Radialrillenkugellager dient gleichzeitig in Verbindung mit der Naben-Wellenverbindung als Loslager für die Motorwelle, die an der Motor-B-Seite somit die der Abtriebsseite gegenüberliegenden Seite mit einem als Festlager ausgebildeten Lager, zum Beispiel einem Rillenkugellager, gelagert ist.

Die Abstützung des als Hohlwelle ausgebildeten Antriebsritzels an der Motorwelle wird über zwei zylindrische Passungen realisiert . Beispielsweise können die zylindrischen Passungen mittels Buchsen oder dergleichen realisiert werden.

Zur axialen Abdichtung können entsprechende Dichtelemente an der Hohlwelle oder auch an der Motorwelle vorgesehen werden.

Nachfolgend wird die vorliegende Erfindung näher anhand der Zeichnungen erläutert. Es zeigen:
- Figur 1: eine geschnittene Teilansicht einer ersten möglichen Ausführungs- variante einer erfindungsgemäßen Antriebsanordnung; und
- Figur 2: eine geschnittene Teilansicht einer zweiten Ausführungsvariante der erfindungsgemäßen Antriebsanordnung.

In den Figuren sind exemplarisch zwei mögliche Ausführungsvarianten einer erfindungsgemäßen Antriebsanordnung für ein Fahrzeug dargestellt. Die Antriebsanordnung umfasst unabhängig von der jeweiligen Ausführungsvariante ein in einem Getriebe integriertes als Hohlwelle ausgebildetes Antriebsritzel 1, welches radial innen ein dem Getriebe zugewandtes Ende einer Motorwelle 2 eines nicht weiter dargestellten Motors aufnimmt. Das Antriebsritzel 1 steht mit seiner Verzahnung 9 mit einem Stirnrad 4 in Eingriff und bildet eine erste Getriebestufe zum Antrieb einer nicht weiter dargestellten Getriebewelle.

Erfindungsgemäß ist das Antriebsritzel 1 motorseitig über ein Radialrillenkugellager 3 gelagert, wobei das Radialrillenkugellager 3 als Festlager für das Antriebsritzel 1 dient. Das Antriebsritzel 1 stützt sich radial über eine axial verschiebbare Naben-Wellenverbindung 5 an der Motorwelle 2 ab. Das Radialrillenkugellager 3 dient gleichzeitig in Verbindung mit der Naben-Wellenverbindung 5 als Loslager für die Motorwelle 2, die an der Motor-B-Seite mit einem zum Beispiel als Festlager ausgebildeten Lager gelagert ist.

Die Abstützung des Antriebsritzels 1 gegen die Motorwelle 2 kann über zwei zylindrische Passungen 6, 7 realisiert werden, welche zum Beispiel als Buchse 10 ausgebildet sind, wobei lediglich eine Buchse 10 dargestellt ist. Auf diese Weise kann die Naben-Wellenverbindung 5 querkraftfrei belastet werden.

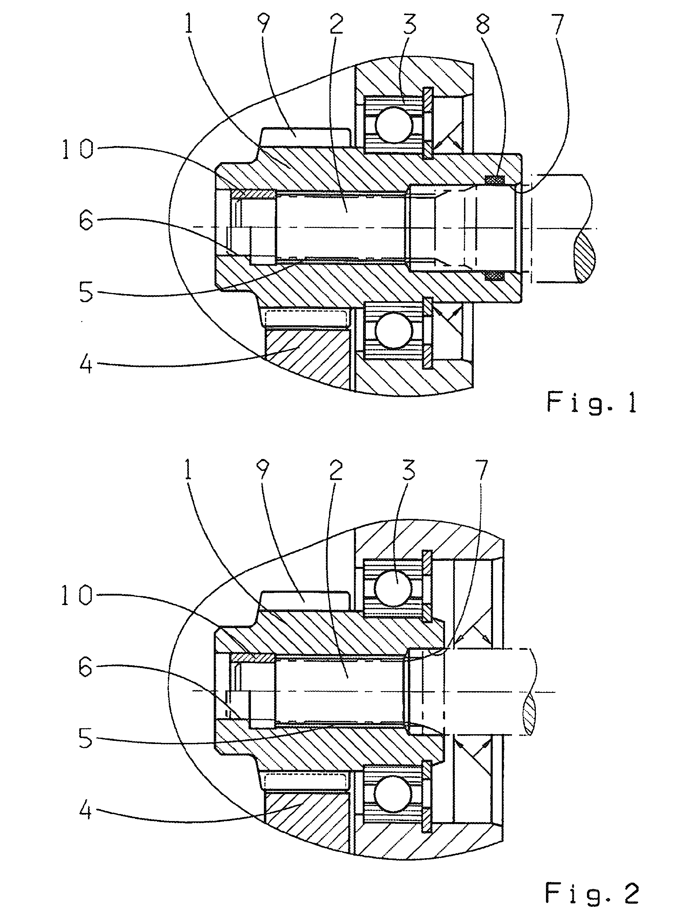

In Figur 1 ist die Abdichtung an dem Antriebsritzel 1 zum Beispiel über einen Dichtring 8 vorgesehen. Demgegenüber ist in Figur 2 die Abdichtung direkt an der Motorwelle 2 vorgesehen.

Die vorgeschlagene Antriebsanordnung wird bei einem Flurförderfahrzeug verwendet. Es sind aber auch andere Einsatzgebiete denkbar.

### Bezugszeichen

- 1: Antriebsritzel
- 2: Motorwelle
- 3: Radialrillenkugellager
- 4: Stirnrad
- 5: Naben-Wellenverbindung
- 6: Passung
- 7: Passung
- 8: Dichtring
- 9: Verzahnung des Antriebsritzel
- 10: Buchse

## Patentansprüche

1. Flurförderfahrzeugantriebsanordnung mit einem in ein Getriebe integriertes als Hohlwelle ausgebildetes Antriebsritzel (1), mit einer zugeordneten Motorwelle (2), welche ein dem Getriebe zugewandtes Ende und ein dem Getriebe abgewandtes Ende, die Motor B-Seite, aufweist **dadurch gekennzeichnet, dass** am Getriebe zugewandten Ende die zugeordnete Motorwelle (2) drehfest und axial verschiebbar in dem Antriebsritzel (1) aufgenommen ist, und die Motorwelle (2) an dem Getriebe abgewandten Ende, über ein Festlager gelagert ist, wobei das Antriebsritzel (1) mit einem Stirnrad (4) im Eingriff steht und das Antriebsritzel (1) motorseitig über ein als Festlager wirkendes Wälzlager (3) gelagert ist und sich radial über eine axial verschiebbare Naben-Wellenverbindung (5) auf der Motorwelle (2) abstütz, wodurch das Wälzlager (3) in Verbindung mit der Naben-Wellenverbindung (5) als Loslager für die Motorwelle (2) dient, und die Abstützung des Antriebsritzels (1) an der Motorwelle (2) über zwei axial beabstandete zylindrische Passungen (6, 7) vorgesehen ist.

2. Antriebsanordnung nach Anspruch 1, **dadurch gekennzeichnet, dass** als Wälzlager ein Radialrillenkugellager (3) vorgesehen ist.

3. Antriebsanordnung nach Anspruch 1 oder 2, **dadurch gekennzeichnet, dass** als Naben-Wellenverbindung (5) eine Zahnwellenverbindung und/oder eine Vielkeilverbindung vorgesehen ist.

4. Antriebsanordnung nach Anspruch 1, **dadurch gekennzeichnet, dass** die zylindrischen Passungen (6, 7) mittels Buchsen (10) realisiert sind.

5. Antriebsanordnung nach einem der vorangehenden Ansprüche, **dadurch gekennzeichnet, dass** eine Abdichtung an dem Antriebsritzel (1) oder an der Motorwelle (2) vorgesehen ist.

## Claims

1. Industrial truck drive assembly comprising a drive pinion (1) which is integrated in a transmission and is in the form of a hollow shaft, comprising an associated motor shaft (2), which has one end facing the transmission and one end, the motor non-drive end, remote from the transmission, **characterized in that** at the end facing the transmission, the associated motor shaft (2) is accommodated in the drive pinion (1) in rotationally fixed and axially displaceable fashion, and the motor shaft (2) at the end remote from the transmission is mounted via a fixed bearing, the drive pinion (1) being in engagement with a spur wheel (4), and the drive pinion (1) being mounted on the motor side via a roller bearing (3), which acts as fixed bearing, and being supported radially on the motor shaft (2) via an axially displaceable hub-shaft joint (5), as a result of which the roller bearing (3), in conjunction with the hub-shaft joint (5), acts as movable bearing for the motor shaft (2), and the support of the drive pinion (1) on the motor shaft (2) being provided via two cylindrical seats (6, 7) which are spaced axially apart.

2. Drive assembly according to Claim 1, **characterized in that** a radial-groove ball bearing (3) is provided as roller bearing.

3. Drive assembly according to Claim 1 or 2, **characterized in that** a serrated-shaft joint and/or a spline joint is provided as hub-shaft joint (5).

4. Drive assembly according to Claim 1, **characterized in that** the cylindrical seats (6, 7) are implemented by means of bushes (10).

5. Drive assembly according to one of the preceding claims, **characterized in that** a seal is provided at the drive pinion (1) or at the motor shaft (2).

## Revendications

1. Ensemble d'entraînement de chariot de manutention, comprenant un pignon d'entraînement (1) réalisé sous forme d'arbre creux et intégré dans une transmission, et comprenant un arbre de moteur (2) associé qui comporte une extrémité orientée vers la transmission et une extrémité opposée à la transmission, c'est-à-dire le côté B du moteur, **caractérisé en ce qu'**à l'extrémité orientée vers la transmission l'arbre de moteur (2) associé est reçu de manière solidaire en rotation et de façon axialement coulissante dans le pignon d'entraînement (1), et l'arbre de moteur (2) est monté, au moyen d'un roulement fixe, au niveau de l'extrémité opposée à la transmission, le pignon d'entraînement (1) s'engrenant avec un pignon droit (4) et le pignon d'entraînement (1) étant monté du côté du moteur au moyen d'un roulement (3) agissant en tant que roulement fixe et s'appuyant radialement par l'intermédiaire d'une liaison arbre-moyeu (5) axialement coulissante sur l'arbre de moteur (2), moyennant quoi le roulement (3), conjointement avec la liaison arbre-moyeu (5), sert de roulement libre pour l'arbre de moteur (2), et l'appui du pignon d'entraînement (1) sur l'arbre de moteur (2) étant prévu par l'intermédiaire de deux ajustements cylindriques (6, 7) axialement espacés.

2. Ensemble d'entraînement selon la revendication 1, **caractérisé en ce qu'**un roulement à billes à rainures radiales (3) est prévu en tant que roulement.

3. Ensemble d'entraînement selon la revendication 1 ou 2, **caractérisé en ce qu'**une liaison par arbre denté et/ou une liaison par cannelures multiples est prévue en tant que liaison arbre-moyeu (5).

4. Ensemble d'entraînement selon la revendication 1, **caractérisé en ce que** les ajustements cylindriques (6, 7) sont réalisés au moyen de douilles (10).

5. Ensemble d'entraînement selon l'une quelconque des revendications précédentes, **caractérisé en ce qu'**une étanchéification est prévue au niveau du pignon d'entraînement (1) ou au niveau de l'arbre de moteur (2).
